# EUROPEAN PATENT APPLICATION

(11) **EP 2 720 472 A1**
(43) Date of publication of application: **16.04.2014**
(21) Application number: 13187481.0
(22) Date of filing: 07.10.2013
(51) Int. Cl.: H04N 21/433, H04N 21/4402, H04N 5/76

(54) **Recording and reproduction device and method for controlling the same**

(30) Priority: 12.10.2012 JP 2012227322
(71) Applicant: Funai Electric Co., Ltd., Daito-shi, Osaka 574-0013 (JP)
(72) Inventor: Nishikawa, Toshihiro, Daito-shi, Osaka 574-0013 (JP)
(74) Representative: Hards, Andrew

(57) **Abstract**

A recording and reproduction device includes an image quality information acquisition component, an image quality information selector, and a converter. The image quality information acquisition component acquires, from a portable device that is configured to be connected to the recording and reproduction device and that is configured to reproduce video content, at least one set of image quality information specifying image quality that is compatible with the portable device. The image quality information selector selects image quality information from among the image quality information acquired by the image quality information acquisition component based on an attribute of transfer content selected to be transferred from the recording and reproduction device to the portable device. The converter converts the transfer content into video content such that the video content has image quality specified by the image quality information that has been selected by the image quality information selector.

## Description

### CROSS-REFERENCE TO RELATED APPLICATIONS

This application claims priority to Japanese Patent Application No. 2012-227322 filed on October 12, 2012. The entire disclosure of Japanese Patent Application No. 2012-227322 is hereby incorporated herein by reference.

### BACKGROUND

### Field of the Invention

The present invention generally relates to a recording and reproduction device. More specifically, the present invention relates to a recording and reproduction device for recording and reproducing video content.

### Background Information

As portable telephones, smart phones, and other such portable devices have become more popular, it has become increasingly common for users to move or copy video content recorded on a recording and reproduction device (such as a hard disk recorder) to a portable device, so that they can reproduce and enjoy the content on the portable device.

For video content to be copied, etc., the user needs to know ahead of time the image quality of the video content that can be reproduced by the portable device. However, ascertaining this image quality can be difficult for a user who is not well versed in the operation of AV devices. Therefore, this can lead to problems such as when the user converts to video content of an image quality not compatible with the portable device, so that the video content will not be reproduced by the portable device.

A conventional device is known with which information such as the bit rate of video content that can be reproduced by the device is acquired, and the video content is compressed based on the acquired information, in order to make the device more convenient to the user in moving or copying content (see Japanese Laid-Open Patent Application Publication No. 2012-109816, for example).

### SUMMARY

However, it has been discovered that even though information such as the bit rate can be acquired from a portable device, that does not necessarily mean that the optimal video content conversion results will be obtained. For example, even with video content that can be reproduced, if the memory capacity of the portable device is too small, it will be impossible to store the video content in the portable device. Also, even if the video content can be stored in the portable device, since the memory capacity of the portable device is limited, it is preferable to reduce the size of the video content as much as possible while still affording easy viewing by the user.

One object of the present disclosure is to provide a recording and reproduction device with which user convenience during copying or moving of video content can be improved while still affording easy viewing by the user.

In view of the state of the know technology, a recording and reproduction device includes an image quality information acquisition component, an image quality information selector, and a converter. The image quality information acquisition component acquires, from a portable device that is configured to be connected to the recording and reproduction device and that is configured to reproduce video content, at least one set of image quality information specifying image quality that is compatible with the portable device. The image quality information selector selects image quality information from among the image quality information acquired by the image quality information acquisition component based on an attribute of transfer content selected to be transferred from the recording and reproduction device to the portable device. The converter converts the transfer content into video content such that the video content has image quality specified by the image quality information that has been selected by the image quality information selector.

Other objects, features, aspects and advantages of the present disclosure will become apparent to those skilled in the art from the following detailed description, which, taken in conjunction with the annexed drawings, discloses a preferred embodiment of a recording and reproduction device.

### BRIEF DESCRIPTION OF THE DRAWINGS

Referring now to the attached drawings which form a part of this original disclosure:

FIG. 1 is a diagram of a video reproduction system that includes a recording and reproduction device in accordance with one embodiment;

FIG. 2 is a block diagram of a hardware configuration of the recording and reproduction device illustrated in FIG. 1;

FIG. 3 is a block diagram of a functional configuration of a system controller of the recording and reproduction device;

FIG. 4 is a flowchart of a processing executed by the recording and reproduction device;

FIG. 5 is a diagram illustrating portable device detection and list display processing of the recording and reproduction device;

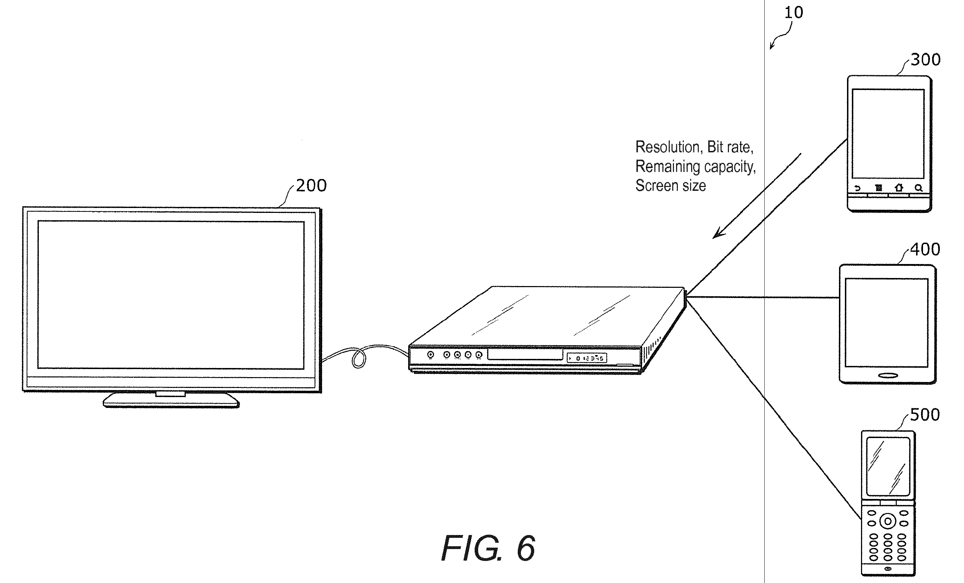

FIG. 6 is a diagram illustrating device information acquisition processing of the recording and reproduction device;

FIG. 7 is a diagram illustrating an example of image quality information for a smart phone, acquired by an image quality information acquisition component of the recording and reproduction device;

FIG. 8 is a diagram illustrating an example of a remaining capacity of the smart phone, acquired by a remaining capacity acquisition component of the recording and reproduction device;

FIG. 9 is a diagram illustrating an example of a screen size of the smart phone, acquired by a screen size acquisition component of the recording and reproduction device;

FIG. 10 is a diagram illustrating recorded program display processing of the recording and reproduction device;

FIG. 11 is a diagram illustrating image quality information selection processing of the recording and reproduction device;

FIG. 12 is a detailed flowchart of the image quality information selection processing; and

FIG. 13 is a detailed flowchart of image quality conversion processing of the recording and reproduction device.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layouts and connection modes of the constituent elements, steps, order of the steps, and so forth given in the following description of the embodiments are provided for illustration only and not for the purpose of limiting the invention. The present invention is defined by the appended claims and their equivalents. Thus, of the constituent elements in the following descriptions of the embodiments, those constituent elements not mentioned in independent claims are optional for achieving the object of the present disclosure, but will be described as constituting preferred embodiments.

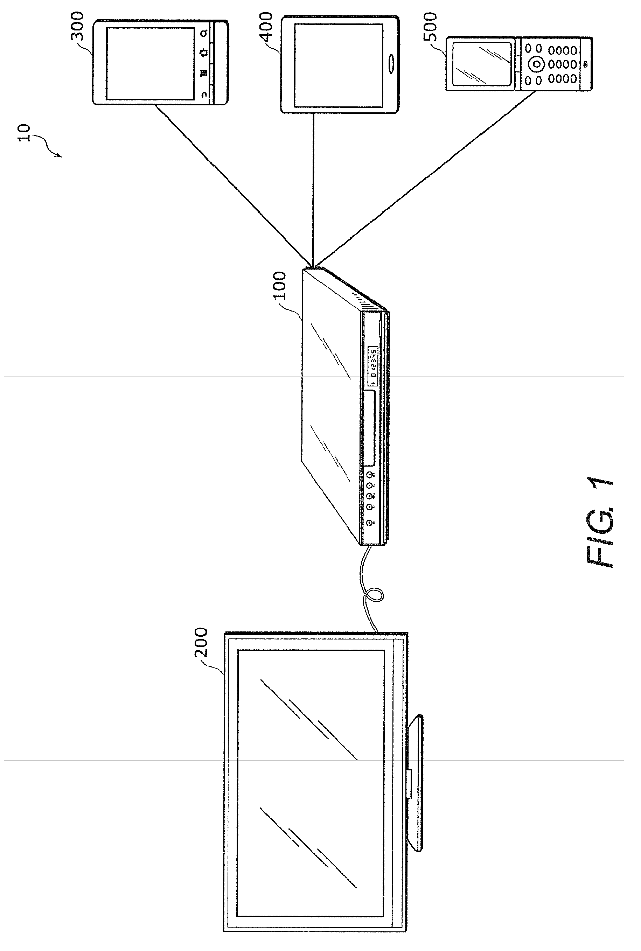

FIG. 1 is a diagram of a video reproduction system 10 in accordance with one embodiment.

The video reproduction system 10 includes a recording and reproduction device 100, a display 200, a smart phone 300, a tablet PC 400, and a portable telephone 500.

The recording and reproduction device 100 is used to record video content transmitted via broadcast waves or the like, and reproduce the recorded video content. The recording and reproduction device 100 converts the image quality of the video content, after which it transfers the converted video content to the smart phone 300, the tablet PC 400, and the portable telephone 500.

The display 200 is connected to the recording and reproduction device 100, and displays the video content reproduced by the recording and reproduction device 100.

The smart phone 300, the tablet PC 400, and the portable telephone 500 are examples of a portable device, and produce the video content whose image quality has been converted and which is transferred from the recording and reproduction device 100.

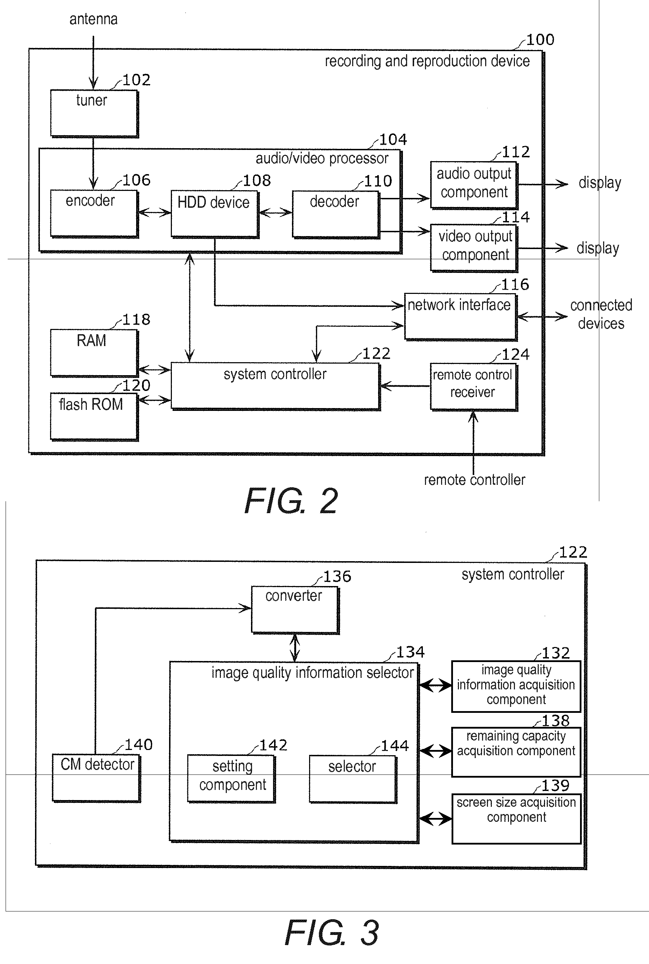

FIG. 2 is a block diagram of a hardware configuration of the recording and reproduction device 100.

The recording and reproduction device 100 includes a tuner 102, an audio/video processor 104, an audio output component 112, a video output component 114, a network interface 116, a RAM 118, a flash ROM 120, a system controller 122, and a remote control receiver 124.

The tuner 102 receives video content via television broadcast waves received by an antenna. The video content is generally television program broadcast data.

The audio/video processor 104 converts the video content into video data of a format that can be displayed on the display 200 and audio data of a format that can be outputted from a speaker. The audio/video processor 104 includes an encoder 106, a HDD (hard disk drive) device 108, and a decoder 110. The encoder 106 encodes the video content received by the tuner 102. The HDD device 108 stores the video content encoded by the encoder 106. The decoder 110 decodes the video content stored on the HDD device 108, and produces video data of a format that can be displayed on the display 200 and audio data of a format that can be outputted from a speaker.

The audio output component 112 outputs the audio data produced by the decoder 110 to a speaker of the display 200. The outputted audio data is then outputted from the speaker of the display 200.

The video output component 114 outputs the video data produced by the decoder 110 to the display 200. The outputted video data is then displayed on the display 200.

The network interface 116 is connected to the smart phone 300, the tablet PC 400, and the portable telephone 500, and sends and receives data to and from these portable devices.

The remote control receiver 124 receives a signal for operating the recording and reproduction device 100 from a remote controller of the recording and reproduction device 100.

The system controller 122 controls the processing of the network interface 116 and the audio/video processor 104 based on the signal received by the remote control receiver 124, etc.

The RAM 118 is a volatile memory that temporarily stores data utilized in control processing performed by the system controller 122.

The flash ROM 120 is a non-volatile memory that stores data utilized in control processing performed by the system controller 122.

FIG. 3 is a block diagram of a functional configuration of the system controller 122. The various processing components are functional processing components that function when the system controller 122 executes a program for operating the recording and reproduction device 100.

The system controller 122 includes an image quality information acquisition component 132, an image quality information selector 134, a converter 136, a remaining capacity acquisition component 138, a screen size acquisition component 139, and a CM detector 140.

The image quality information acquisition component 132 acquires, from a portable device connected to the recording and reproduction device 100 and capable of reproducing video content, at least one set of image quality information specifying the image quality of video content that can be reproduced with the portable device. The "portable device" referred to here is the smart phone 300, the tablet PC 400, or the portable telephone 500. The image quality information specifies the bit rate of video content that can be reproduced by the portable device, or the resolution (pixel count) of the portable device.

The image quality information selector 134 selects one side of image quality information from among the image quality information acquired by the image quality information acquisition component 132, based on an attribute of transfer content, which is video content to be transferred from the recording and reproduction device 100 to the portable device.

The image quality information selector 134 includes a setting component 142 and a selector 144. The setting component 142 sets first image quality information from among the image quality information acquired by the image quality information acquisition component 132 as the image quality information in the initial state. The first image quality information is, for example, the image quality information with the highest image quality (the highest resolution and the highest bit rate) out of the image quality information acquired by the image quality information acquisition component 132. If the attribute of the transfer content is a predetermined attribute, the selector 144 selects second image quality information included in the image quality information that is acquired by the image quality information acquisition component 132 and that has lower image quality than the first image quality information, as one set of image quality information.

The converter 136 converts the transfer content into the video content of the image quality specified by the set of image quality information selected by the image quality information selector 134. The converter 136 realizes the conversion processing of video content by operating the audio/video processor 104.

The remaining capacity acquisition component 138 acquires from the portable device the remaining data capacity that can be stored in the portable device.

The screen size acquisition component 139 acquires from the portable device the screen size of the portable device.

The CM detector 140 detects the CM (commercial message) portion included in the transfer content.

The processing executed by the recording and reproduction device 100 will now be described in detail while giving a specific example.

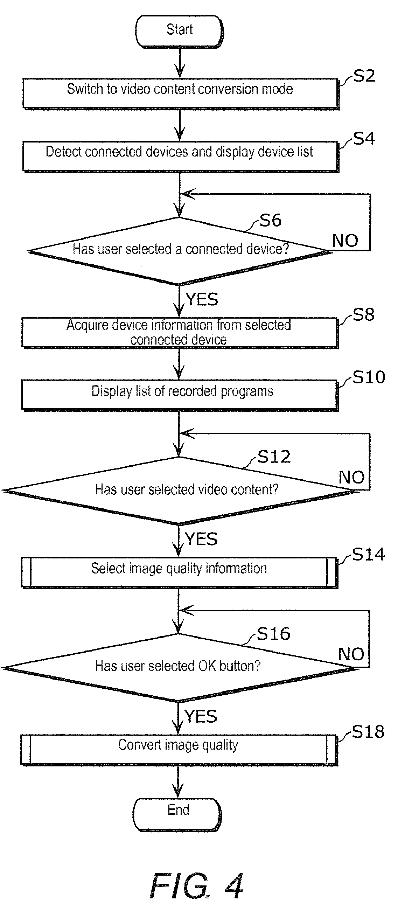

FIG. 4 is a flowchart of a processing executed by the recording and reproduction device 100.

In response to an operation signal sent when the user operates the remote control, etc., of the recording and reproduction device 100, the recording and reproduction device 100 switches to video content conversion mode (step S2). This video content conversion mode is a mode for converting the video content recorded to the HDD device 108 (transfer content) into video content that can be reproduced by the portable device connected to the recording and reproduction device 100. For example, it is a mode for copying or moving video content.

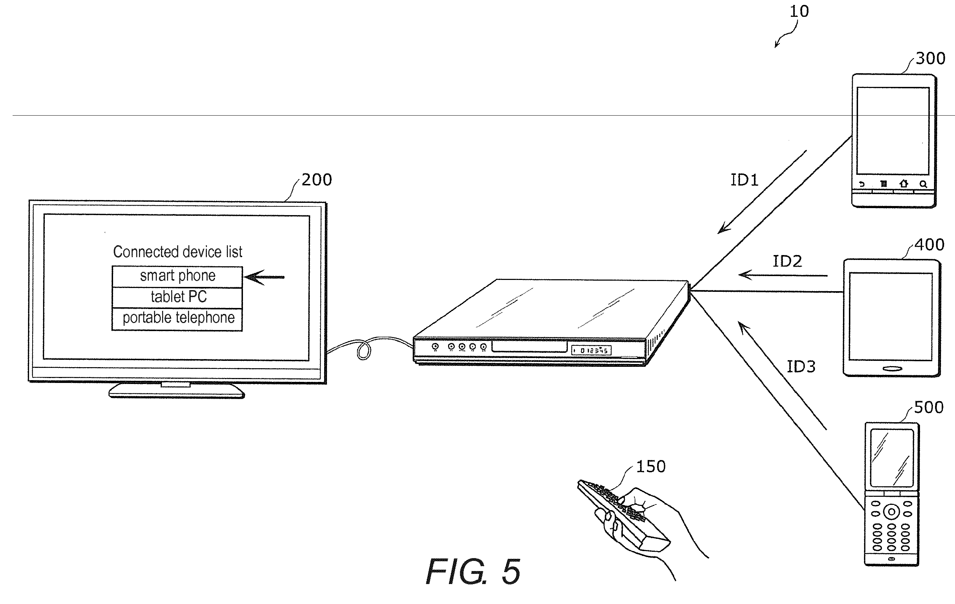

The system controller 122 detects portable devices connected to the recording and reproduction device 100 via the network interface 116, and a list of names of detected portable devices is displayed on the display 200 connected to the recording and reproduction device 100 (step S4). This detection of portable devices is performed according to an existing protocol, such as UPnP (universal plug and play), which is established under DLNA (Digital Living Network Alliance) guidelines. Rather than using an existing protocol, the detection can be performed using an independently developed protocol. As shown in FIG. 5, for example, the system controller 122 detects portable devices by acquiring an ID1, ID2, and ID3 as IDs from the smart phone 300, the tablet PC 400, and the portable telephone 500, respectively. The system controller 122 converts the acquired IDs of the portable devices into names of portable devices. This conversion into names can be performed by referring to a data table giving the relation between portable devices and names held in advance by the recording and reproduction device 100. The system controller 122 displays a list of portable device names on the display 200. FIG. 5 shows names including "smart phone," "tablet PC," and "portable telephone" as the list of portable device names.

The user selects the portable device to which the video content will be transferred, from the list of portable device names, by operating a remote control 150 of the recording and reproduction device 100. Let us assume here that "smart phone" has been selected, for example. The system controller 122 determines whether a portable device is selected or not based on the operation of the remote controller 150 (step S6) while determining that a potable device is not selected (No in step S6). When a portable device is selected (Yes in step S6), the image quality information acquisition component 132, the remaining capacity acquisition component 138, and the screen size acquisition component 139 inquire image quality information, remaining capacity, and screen size of the selected portable device, respectively, and acquire this information (step S8). The "image quality information" here is data specifying the image quality of video content that can be reproduced by the portable device, and specifies the bit rate of the video content that can be reproduced by the portable device or the resolution of the portable device. The remaining capacity is the amount of free capacity in the memory region of the portable device, and is the maximum data capacity that can be used from this point on. The screen size is the size of the screen on the portable device. The image quality information, remaining capacity, and screen size will hereinafter be collectively referred to as device information. Since "smart phone" has been selected here, the image quality information acquisition component 132, the remaining capacity acquisition component 138, and the screen size acquisition component 139 respectively acquire the image quality information specifying resolution and bit rate, the remaining capacity, and the screen size from the smart phone 300.

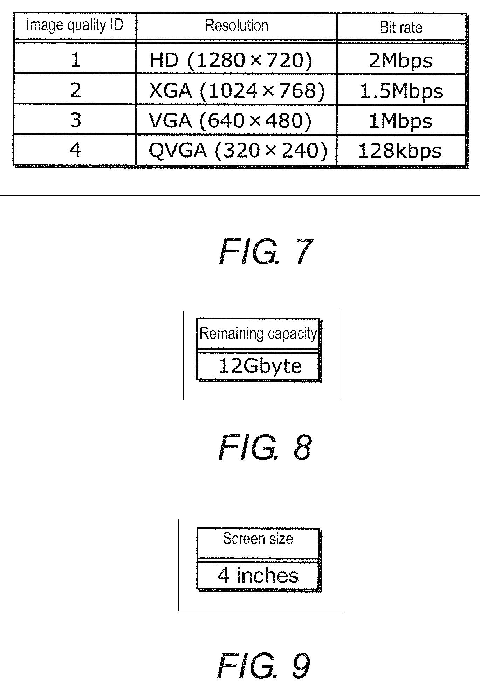

FIG. 7 shows an example of image quality information for the smart phone 300, acquired by the image quality information acquisition component 132. Each record of image quality information includes an image quality ID, resolution, and bit rate. For example, the record with image quality ID "1" has a resolution of "HD (1280 × 720)" and a bit rate of "2 Mbps." In the example in FIG. 7, the smart phone 300 is compatible with four different resolution levels, and can reproduce video content at four different bit rates.

FIG. 8 shows an example of the remaining capacity of the smart phone 300, acquired by the remaining capacity acquisition component 138. That is, it shows that the remaining data capacity of the smart phone 300 is 12 gigabytes.

FIG. 9 shows an example of the screen size of the smart phone 300, acquired by the screen size acquisition component 139. That is, it is shows that the screen size of the smart phone 300 is 4 inches.

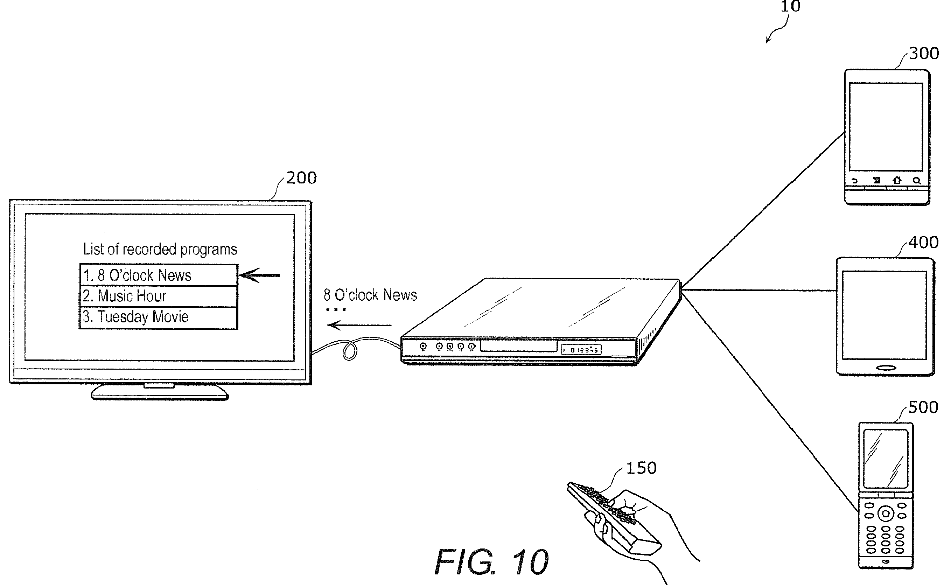

Next, the system controller 122 displays a recorded program list on the display 200 (step S10). This recorded program list is a list of names of video content recorded to the HDD device 108. As shown in FIG. 10, for example, the system controller 122 displays "8 O'clock News," "Music Hour," and "Tuesday Movie," which are names of video content, on the display 200.

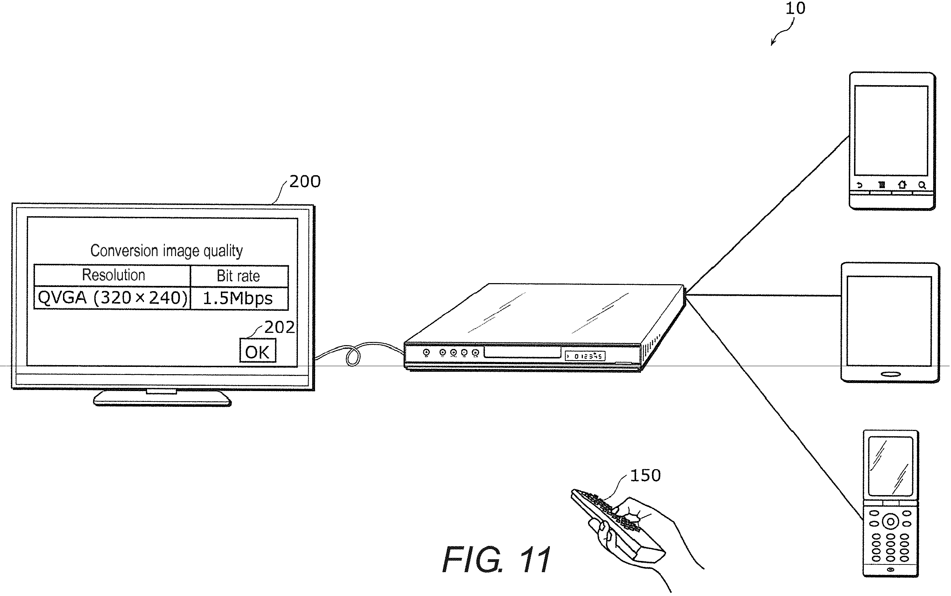

The user operates the remote control 150 of the recording and reproduction device 100 to select from the recorded program list the video content to be transferred from the recording and reproduction device 100 to the portable device. Let us assume here at the "8 O'clock News" has been selected. The system controller 122 determines whether video content is selected or not based on the operation of the remote controller 150 (step S12) while determining that video content is not selected (No in step S12). When video content is selected (Yes in step S12), the image quality information selector 134 selects one set of image quality information from the image quality information acquired by the image quality information acquisition component 132, based on an attribute of transfer content, which is the video content selected to be transferred from the recording and reproduction device 100 to the portable device (step S14). As shown in FIG. 11, the image quality information selector 134 displays the selected image quality information on the display 200. The image quality information selection processing (step S14) will be discussed in detail below.

If the user wishes to convert the transfer content into video content of the image quality information displayed on the display 200, the user operates the remote control 150 of the recording and reproduction device 100 and presses an OK button 202.

The system controller 122 determines whether the OK button 202 is pressed or not based on the operation of the remote controller 150 (step S16) while determining that the OK button 202 is not pressed (No in step S16). When the OK button 202 is pressed (Yes in step S16), the converter 136 converts the image quality of the transfer content (step S18). The details of the image quality conversion processing (step S18) will be discussed below.

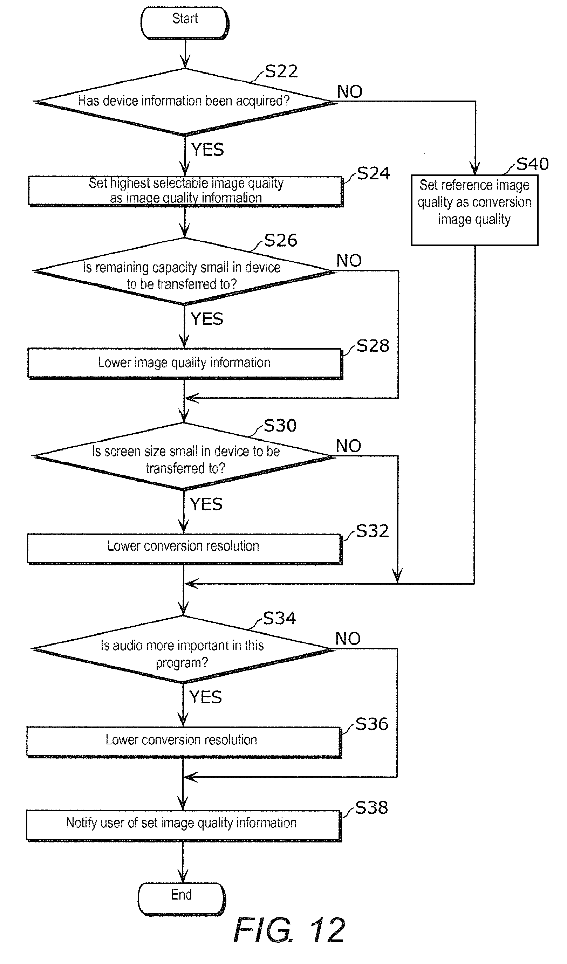

Next, the image quality selection processing (step S14 in FIG. 4) will be described in detail. FIG. 12 is a detailed flowchart of image quality information selection processing (step S14 in FIG. 4).

The system controller 122 (e.g., the image quality information acquisition component 132) determines whether or not device information has been acquired from the selected portable device by the image quality information acquisition component 132, the remaining capacity acquisition component 138, and the screen size acquisition component 139 in device information acquisition processing (step S8 in FIG. 4) (step S22). If the device information has been acquired (Yes in step S22), the setting component 142 sets the image quality information for highest image quality (highest resolution and highest bit rate) out of the image quality information acquired by the image quality information acquisition component 132, as the image quality information in the initial state (step S24). For example, if the image quality information shown in FIG. 7 has been acquired, a resolution of "HD (1280 × 720)" and a bit rate of "2 Mbps" are set as the image quality information in the initial state. On the other hand, if the device information has not been acquired (No in step S22), the setting component 142 sets reference image quality information out of the image quality information acquired by the image quality information acquisition component 132, as conversion image quality (step S40), and the process proceeds to step S34. For example, the reference image quality information is preset to a resolution of "VGA (640 × 480)" and a bit rate of "1 Mbps." Of course, the reference image quality information can be preset to other value.

The selector 144 determines whether or not the remaining capacity acquired by the remaining capacity acquisition component 138 is low (step S26). That is, the selector 144 determines whether or not the remaining capacity acquired by the remaining capacity acquisition component 138 is less than the size of video content of the image quality specified by the initial state image quality information, which is the video content converted from the transfer content.

If the remaining capacity is low, that is, if the remaining capacity is less than the size of the converted video content (Yes in step S26), the setting component 142 lowers the initial state image quality information (resolution and bit rate) by one level (step S28). That is, the setting component 142 sets as the image quality information the resolution "XGA (1024 × 768)" and the bit rate "1.5 Mpbs" stored in the second record in the image quality information shown in FIG. 7. On the other hand, if the remaining capacity is not less than the size of the converted video content (No in step S26), the current image quality information (e.g., the initial state image quality information) is maintained, and the process proceeds to step S30.

Next, the selector 144 determines whether or not the screen size acquired by the screen size acquisition component 139 is small (step S30). That is, the selector 144 determines whether or not the screen size acquired by the screen size acquisition component 139 is below a predetermined screen size threshold.

If the screen size is small, that is, if the screen size is below the predetermined screen size threshold (Yes in step S30), the setting component 142 lowers the resolution in the image quality information by one level (step S32). For example, if the screen size is 4 inches and the screen size threshold is 5 inches, the currently set resolution of "XGA (1024 × 768)" is lowered by one level to a resolution of "VGA (640 × 480)." On the other hand, if the screen size is not below the predetermined screen size threshold (No in step S30), the current image quality information is maintained, and the process proceeds to step S34.

Next, the selector 144 determines whether or not the transfer content is a program with emphasis on audio (step S34). More specifically, the selector 144 determines the program to be one with emphasis on audio if the genre information indicating the genre of the transfer content assigned to the transfer content is music or news. This genre information is one of the attributes of the transfer content. If the program is determined to be one with emphasis on audio (Yes in step S34), the setting component 142 lowers the resolution in the image quality information by one level (step S36). Since the "8 O'clock News" is currently selected as the transfer content, this transfer content is a program with emphasis on audio. Accordingly, the selector 144 lowers the currently set resolution of "VGA (640 × 480)" to a resolution of "QVGA (320 × 240)." On the other hand, if the program is determined not to be one with emphasis on audio (No in step S34), the current image quality information is maintained, and the process proceeds to step S38.

The setting component 142 notifies the user of the set image quality information (step S38). In the processing so far, the resolution has been set to "QVGA (320 × 240)" and the bit rate to "1.5 Mbps." Therefore, the setting component 142 notifies the user by displaying the resolution and bit rate on the display 200 as shown in FIG. 11.

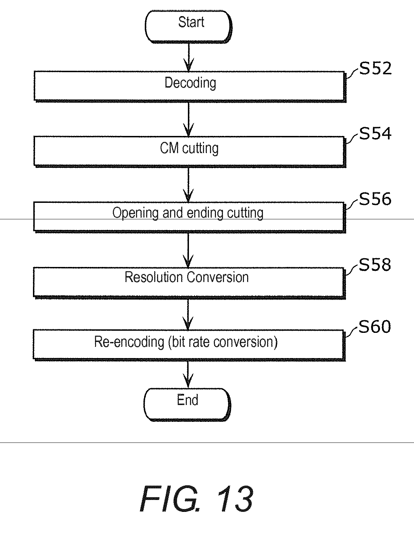

Next, the image quality conversion processing (step S18 in FIG. 4) will be described in detail. FIG. 13 is a detailed flowchart of image quality conversion processing (step S18 in FIG. 4).

The converter 136 causes the decoder 110 to decode the transfer content stored in the HDD device 108 (step S52).

The CM detector 140 detects the CM (commercial message) portion included in the decoded transfer content, and the converter 136 deletes the CM portion from the transfer content (step S54). That is, the CM reproduction time period is detected from the transfer content, and the detected reproduction time period is cut. For example, the CM detector 140 detects the CM reproduction time period according to a CM signal included in the CM reproduction time period part of the transfer content. The method for detecting the CM reproduction time period is not limited to this, and some other method can be used instead, such as using the switching point between dual-language audio and stereo audio as the CM start or end point.

The converter 136 detects the opening portion or the ending portion from the transfer content, and deletes it (step S56). The converter 136 can detect a predetermined time period from the start of transfer content as the opening portion. Also, the converter 136 can detect as the ending portion the time period from a predetermined length of time before the end of the transfer content until the end of the transfer content.

The converter 136 converts the resolution (pixel count) of the transfer content from which the opening or ending portion has been cut, into the resolution selected by the image quality information selection processing (step S14 in FIG. 4). That is, the converter 136 converts the resolution of the transfer content by subjecting the transfer content to pixel thinning, averaging, or other such image processing (step S58).

The converter 136 causes the encoder 106 to re-encode the transfer content whose resolution has been converted (step S60). Here, the converter 136 converts the bit rate of the transfer content into the bit rate selected by the image quality information selection processing (step S14 in FIG. 4). For example, the converter 136 converts the bit rate by sending the encoder 106 a bit rate as a parameter during encoding. Since this encoding can be a conventional encoding, detailed description will be omitted for the sake of brevity.

As described above, in this embodiment, transfer content is converted so as to attain an image quality selected based on an attribute of the transfer content, out of the image qualities compatible with a portable device connected to the recording and reproduction device 100. Therefore, video content of different image quality can be produced when the attribute of the transfer content is an attribute that demands high image quality, and when the attribute is not one that demands high image quality. Consequently, user convenience during copying or moving of video content can be improved by automatically determining the image quality at which the size of the video content can be reduced while still affording easy viewing by the user. Furthermore, the size of the video content can be reduced by decreasing the resolution or decreasing the bit rate.

More specifically, when the attribute of the transfer content is a predetermined attribute, the image quality of the converted video content can be reduced.

The image quality of the converted video content can also be reduced when the genre of the transfer content is a predetermined genre.

For example, with music or news video content, the audio can be more important than the video to the user. Therefore, if the genre of the transfer content is a genre related to music or news, the user does not perceive anything visually amiss even when the image quality of the converted video content is lowered.

Also, when the screen size of the portable device is small, the image quality of the video content is lowered. If the screen size of the portable device is small, the user will notice hardly any difference in image quality between when video content of high image quality is viewed and when video content of low image quality is viewed. Therefore, in this case the user does not perceive anything visually amiss even when the image quality of the converted video content is lowered.

Also, when the remaining capacity of the portable device is small, the size of the video content can be reduced while still affording easy viewing by the user.

Also, the CM portion from the video content during image quality conversion processing (step S18 in FIG. 4) is excluded. This allows the size of the video content to be further reduced.

Also, the opening portion or the ending portion is excluded from the video content during image quality conversion processing (step S18 in FIG. 4). This allows the size of the video content to be further reduced.

The recording and reproduction device 100 in accordance with one embodiment is described above, but the present invention is not limited to or by this embodiment.

For example, in the above embodiment, only one set of video content is selected by the user in the video content selection processing (step S12 in FIG. 4), but the user can select two or more sets of video content. In this case, a priority order can be provided to the various sets of video content that are selected in the image quality information selection processing (step S14 in FIG. 4), and the image quality information can be selected according to this priority order for each set of video content.

For example, the image quality information can be selected so that the priority order is set lower as the size of the video content is larger, and so that the image quality is set lower as the priority order of the video content is lower, that is, as the size of the video content is larger. The larger is the size of the video content, the greater will be the effect of size reduction. Therefore, this configuration enhances the effect of reducing the size of the video content.

The priority order can be determined by something other than the size of the video content. For instance, the priority order can be determined based on genre information belonging to the video content. If the genre information indicates that the content is a movie, a drama, or the like, there is a higher possibility that the video is the more important part of the video content, so the priority order is set higher. Conversely, if the genre information indicates that the content is news, music, or the like, there is a higher possibility that the audio is the more important part of the video content, so the priority order is set lower. Consequently, video content of new or music with a lower priority order is converted to a lower image quality than that of video content of a movie or a drama with a higher priority order.

Also, the portable devices connected to the recording and reproduction device 100 are not limited to the smart phone 300, the tablet PC 400, and the portable telephone 500, and any other portable device can be used so long as it allows video content to be reproduced. Nor is there any limit on the number of portable device, so long as that number of devices can be connected to the recording and reproduction device 100.

Also, in the above embodiment the recording and reproduction device 100 and the portable devices are directly connected, but they can instead be connected via a network, such as a LAN (local area network).

Also, the various devices discussed above can be configured as a computer system having a microprocessor, ROM, RAM, hard disk drive, display unit, keyboard, mouse, and so forth. Computer programs are stored in the RAM or the hard disk drive. The microprocessor operates according to a computer program, allowing the various devices to perform their functions. The computer program here includes a plurality of combinations of command code indicating commands to the computer so as to achieve specific functions.

Some or all of the constituent elements that make up the various devices discussed above can be constituted by a single system LSI (large scale integration). A system LSI is a super-multifunctional LSI manufactured by integrating a plurality of components on a single chip. More specifically, it is a computer system that includes a microprocessor, ROM, and RAM. Computer programs are stored in the RAM. The microprocessor operates according to a computer program, allowing the system LSI to achieve its function.

Some or all of the constituent elements that make up the various devices discussed above can also be constituted by a single module or a removable IC card for each device. The IC card or module is a computer system made up of a microprocessor, ROM, RAM, etc. The IC card or module can include the above-mentioned super-multifunctional LSI. The microprocessor operates according to a computer program, allowing the IC card or module to achieve its function. The IC card or module can be tamper resistant.

The present invention can be realized as the above-mentioned method. Further, the present invention can be realized as a computer program by which these methods are realized by a computer, or can be realized as a digital signal made of the computer program.

Furthermore, the digital signal or the computer program can be recorded to a computer-readable non-transitory recording medium, such as a flexible disk, a hard disk, a CD-ROM, an MO, a DVD, a DVD-ROM, a DVD-RAM, a BD (Blu-ray Disc), a semiconductor memory, or the like. The present invention can also be realized as the above-mentioned digital signal that has been recorded to one of these non-transitory recording mediums.

The present invention can also be such that the digital signal or the computer program is transmitted via an electrical communication line, a wired or wireless communication line, a network such as the Internet, data broadcasting, or the like.

The present invention can also be a computer system equipped with a microprocessor and a memory, with the memory storing the computer programs and the microprocessor operating according to the computer programs.

The present invention can also be another, independent computer system, by transferring the digital signal or the program to the non-transitory recording medium, or by transferring the digital signal or the program via the above-mentioned network or the like.

Also, the recording and reproduction device 100 in accordance with one embodiment includes the image quality information selector 134, the image quality information acquisition component 132, and the converter 136 in the system controller 122 as shown in FIG. 3. The other components are optional, and do not necessarily have to be provided to the recording and reproduction device 100.

Furthermore, the embodiments and modification examples discussed above can be combined with each other.

The present invention can be applied to a hard disk recorder, a DVD recorder, a BD recorder, or the like that records and reproduces television programs and other such video content.

In the illustrated embodiment, the recording and reproduction device includes an image quality information acquisition component, an image quality information selector, and a converter. The image quality information acquisition component acquires, from a portable device that is connected to the recording and reproduction device and that is capable of reproducing video content, at least one set of image quality information specifying the image quality of video content that can be reproduced with the portable device. The image quality information selector selects image quality information from among the image quality information acquired by the image quality information acquisition component, based on an attribute of transfer content, which is video content to be transferred from the recording and reproduction device to the portable device. The converter converts the transfer content into video content of the image quality specified by the image quality information selected by the image quality information selector.

With this configuration, the transfer content is converted so that it will have, out of the image qualities compatible with the portable device connected to the recording and reproduction device, an image quality selected based on the attribute of the transfer content. Therefore, video content of different image quality can be produced when the attribute of the transfer content is an attribute that demands high image quality and when the attribute of the transfer content is not an attribute that demands high image quality. Consequently, user convenience during copying or moving of video content can be improved by automatically determining the image quality at which the size of the video content can be reduced while still affording easy viewing by the user.

For instance, the image quality information selector can have a setting component for setting first image quality information as the initial image quality information, from among the image quality information acquired by the image quality information acquisition component, and a selector for selecting second image quality information included in the image quality information that is acquired by the image quality information acquisition component and that has lower image quality than the first image quality information, when the attribute of the transfer content is a predetermined attribute.

With this configuration, when the attribute of the transfer content is a predetermined attribute, the image quality of the converted video content can be lowered.

Also, the attribute of the transfer content can be the genre of the transfer content.

With this configuration, when the genre of the transfer content is a predetermined genre, the image quality of the converted video content can be lowered.

Also, the selector can select the second image quality information when the genre of the transfer content is a genre related to music or news.

With video content that is music or news, it is conceivable that the audio can be more important to the user than the video. Therefore, if the genre of the transfer content is a genre related to music or news, the user does not perceive anything visually amiss even when the image quality of the converted video content is lowered.

Also, the above-mentioned recording and reproduction device can further include a screen size acquisition component for acquiring from the portable device the screen size of the portable device. The selector can select third image quality information that is included in the image quality information acquired by the image quality information acquisition component and that has lower image quality than the second image quality information, when the attribute of the transfer content is a predetermined attribute and the screen size of the portable device is at or below a predetermined size.

When the screen size of the portable device is small, the user notices hardly any difference in image quality between when video content of high image quality is viewed and when video content of low image quality is viewed. Therefore, in this case the user does not perceive anything visually amiss even when the image quality of the converted video content is lowered.

Also, the above-mentioned recording and reproduction device can further include a remaining capacity acquisition component for acquiring from the portable device the remaining data capacity that can be stored in the portable device. The selector can further select third image quality information that is included in the image quality information acquired by the image quality information acquisition component and that has lower image quality than the second image quality information, when the attribute of the transfer content is a predetermined attribute and the remaining capacity acquired by the remaining capacity acquisition component is less than the size of the video content of the image quality specified by the first image quality information for which the transfer content has been converted.

With this configuration, when the remaining capacity of the portable device is small, the size of the video content can be reduced while still affording easy viewing by the user.

Also, when there is a plurality of sets of transfer content, the image quality information selector selects the image quality information corresponding to the priority order of the transfer content for each transfer content.

More specifically, when there is a plurality of sets of transfer content, the image quality information selector can select the image quality information for each transfer content so that the image quality is set lower as the size of the transfer content is larger.

The larger is the size of the video content, the greater is the effect of reducing size. Therefore, this configuration allows the effect of reducing the size of video content to be enhanced.

Also, the above-mentioned recording and reproduction device can further include a CM (commercial message) detector for detecting the CM portion included in the transfer content. The converter can convert the transfer content excluding the CM portion detected by the CM detector into the video content of the image quality specified by the image quality information selected by the image quality information selector.

Excluding the CM portion allows the size of the video content to be further reduced.

Also, the converter can convert the transfer content excluding the opening portion or the ending portion of the transfer content into the video content of the image quality specified by the image quality information selected by the image quality information selector.

Excluding the opening portion or the ending portion allows the size of the video content to be further reduced.

Also, the image quality information can specify the bit rate of video content that can be reproduced with the portable device or the resolution of the portable device.

Reducing the resolution or the bit rate allows the size of the video content to be reduced.

The present invention can be realized not only as a recording and reproduction device including these characteristic processing components, and can also be realized as a method for controlling a recording and reproduction device, including steps involving processing executed by the characteristic processing components included in the recording and reproduction device. The present invention can also be realized as a program for causing a computer to function as the characteristic processing components included in the recording and reproduction device, or a program that causes a computer to execute the characteristic steps included in the recording and reproduction device control method. It should go without saying that this program can be distributed through the Internet or another such communications network, or on a non-transitory recording medium that can be read by a computer, such as a CD-ROM (compact disc-read only memory).

With the above mentioned arrangements, user convenience during copying or moving of video content can be improved by automatically determining the image quality at which the size of the video content can be reduced while still affording easy viewing by the user.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

## Claims

1. A recording and reproduction device comprising:
an image quality information acquisition component configured to acquire, from a portable device that is configured to be connected to the recording and reproduction device and that is configured to reproduce video content, at least one set of image quality information specifying image quality that is compatible with the portable device;
an image quality information selector configured to select image quality information from among the image quality information acquired by the image quality information acquisition component based on an attribute of transfer content selected to be transferred from the recording and reproduction device to the portable device; and
a converter configured to convert the transfer content into video content such that the video content has image quality specified by the image quality information that has been selected by the image quality information selector.

2. The recording and reproduction device according to claim 1, wherein
the image quality information selector further includes
a setting component configured to set first image quality information from among the image quality information acquired by the image quality information acquisition component as initial image quality information, and
a selector configured to select second image quality information specifying lower image quality than the first image quality information from among the image quality information acquired by the image quality information acquisition component while the attribute of the transfer content includes a predetermined attribute.

3. The recording and reproduction device according to claim 2, wherein
the attribute of the transfer content includes a genre of the transfer content.

4. The recording and reproduction device according to claim 3, wherein
the selector is configured to select the second image quality information while the genre of the transfer content includes a genre corresponding to one of music and news.

5. The recording and reproduction device according to any of claims 2 to 4, further comprising
a screen size acquisition component configured to acquire screen size of the portable device from the portable device,
the selector being further configured to select third image quality information specifying lower image quality than the second image quality information from among the image quality information acquired by the image quality information acquisition component while the attribute of the transfer content includes the predetermined attribute and the screen size of the portable device is at or below a predetermined size.

6. The recording and reproduction device according to any of claims 2 to 4, further comprising
a remaining capacity acquisition component configured to acquire remaining data capacity of the portable device from the portable device,
the selector being further configured to select third image quality information specifying lower image quality than the second image quality information from among the image quality information acquired by the image quality information acquisition component while the attribute of the transfer content includes the predetermined attribute and the remaining data capacity acquired by the remaining capacity acquisition component is less than data size of video content into which the transfer content is converted such that the video content has image quality specified by the first image quality information.

7. The recording and reproduction device according to any of claims 1 to 6, wherein
the image quality information selector is further configured to select the image quality information in accordance with a priority order of a plurality of sets of transfer content for each transfer content.

8. The recording and reproduction device according to claim 7, wherein
the image quality information selector is further configured to select the image quality information for each transfer content such that the image quality is set lower as data size of the transfer content is larger.

9. The recording and reproduction device according to any of claims 1 to 8, further comprising
a CM (commercial message) detector configured to detect a CM portion in the transfer content,
the converter being further configured to convert the transfer content excluding the CM portion that has been detected by the CM detector into the video content such that the video content has the image quality specified by the image quality information that has been selected by the image quality information selector.

10. The recording and reproduction device according to any of claims 1 to 8, wherein
the converter is further configured to convert the transfer content excluding one of an opening portion and an ending portion of the transfer content into the video content such that video content has the image quality specified by the image quality information that has been selected by the image quality information selector.

11. The recording and reproduction device according to any of claims 1 to 10, wherein
the image quality information specifies one of resolution of the portable device and bit rate of video content that is compatible with the portable device as the image quality.

12. A method for controlling a recording and reproduction device, the method comprising:
acquiring, from a portable device that is configured to reproduce video content, at least one set of image quality information specifying image quality that is compatible with the portable device;
selecting image quality information from among the image quality information that has been acquired based on an attribute of transfer content selected to be transferred from the recording and reproduction device to the portable device; and
converting the transfer content into video content such that the video content has image quality specified by the image quality information that has been selected.
